# EUROPÄISCHE PATENTSCHRIFT

(11) **EP 3 128 133 B1**
(45) Veröffentlichungstag und Bekanntmachung des Hinweises auf die Patenterteilung: **27.03.2019**
(21) Anmeldenummer: 16180925.6
(22) Anmeldetag: 25.07.2016
(51) Int. Cl.: F01D 25/14, F01D 25/26

(54) **VORRICHTUNG UND VERFAHREN ZUM BEEINFLUSSEN DER TEMPERATUREN IN INNENRINGSEGMENTEN EINER GASTURBINE**
DEVICE AND METHOD FOR INFLUENCING THE TEMPERATURES IN INTERNAL RING SEGMENTS OF A GAS TURBINE
DISPOSITIF ET PROCÉDÉ DESTINÉS À INFLUENCER LES TEMPERATURES DANS DES SEGMENTS ANNULAIRES INTERNES D'UNE TURBINE A GAZ

(30) Priorität: 07.08.2015 DE 102015215144
(43) Veröffentlichungstag der Anmeldung: 08.02.2017
(73) Patentinhaber: MTU Aero Engines AG, 80995 München (DE)
(72) Erfinder: Lauer, Christoph, 80637 München (DE)

(56) Entgegenhaltungen:
- EP-A1- 1 847 684
- EP-A2- 0 244 693
- EP-A2- 1 052 375
- CN-B- 101 860 119
- US-A- 4 668 163
- US-A- 5 470 198
- US-A1- 2005 123 389
- US-A1- 2005 238 477
- US-A1- 2013 213 057

## Beschreibung

Die Erfindung betrifft eine Vorrichtung zum Beeinflussen der Temperaturen in Innenringsegmenten einer Gasturbine und ein Verfahren zum Beeinflussen der Temperaturen in Innenringsegmenten einer Gasturbine mittels der Vorrichtung.

In Gasturbinen wird ein Heißgasstrom zwischen zwei Leitschaufelkränzen innerhalb eines Mantelrings geführt. Der Mantelring umfasst einen Außenmantel und einen Innenmantel, die jeweils segmentiert sind. Die Zahl der Außensegmente ist meistens größer als die Zahl der Innensegmente. Im Allgemeinen liegen Spalte zwischen den Außensegmenten Mittenbereichen von Innensegmenten gegenüber. Die Spalte ermöglichen eine thermische Ausdehnung der Außensegmente und der Innensegmente. Während des Betriebs strömt ein Teil des Heißgases in die Spalte zwischen den Innensegmenten und heizt die Endbereiche der Innensegmente auf. Die Mittenbereiche sind etwas kühler. Außerdem strömt Kühlluft durch die Spalte der Außensegmente und trifft auf die ohnehin schon kühleren Mittenbereiche der Innensegmente. Dadurch entstehen hohe Temperaturgradienten innerhalb der Innensegmente und führen zu Rissen.

Um diesem Problem zu begegnen, werden Abdeckelemente über die Spalte zwischen den Innensegmenten gelegt, die an einem Innensegment befestigt sind und über ein benachbartes Innensegment hinausragen. Jedoch bleibt eine Undichtigkeit gegenüber dem Heißgas bestehen, wodurch die Endbereiche am Umfang der Innensegmente stärker aufgeheizt werden als die Mittenbereiche. Alternativ werden die Innensegmente verstärkt, wodurch jedoch das Gewicht der Innensegmente erhöht wird.

Die Druckschrift DE 602 13 538 T2 beschreibt eine Gasturbine mit Innenmantelsegmenten und Außenmantelsegmenten. Durch Spalte zwischen den Innenmantelsegmenten strömt Kühlluft in radialer Richtung der Gasturbine von außen nach innen, um zu verhindern, dass Heißgas in die Spalte eintritt und die Endbereiche am Umfang der Innenmantelsegmente aufheizt. Nachteilig ist hierbei die komplizierte Geometrie in den Endbereichen der Innenmantelsegmente, die einen erhöhten Fertigungsaufwand erfordert.

Die Druckschrift US 7,604,453 B2 offenbart eine Gasturbine mit äußeren und inneren Abdecksegmenten, die einen Mantel zwischen einer ersten Leitschaufelreihe und einem Hochdruckturbinenbereich bilden. Zwischen den äußeren Plattformen der Leitschaufelreihe und dem Innenring befindet sich ein Spalt, durch den Kühlluft in radialer Richtung der Gasturbine von außen nach innen strömt. Außerdem werden die inneren Abdecksegmente mittels Prallkühlung, Konvektionskühlung und Filmkühlung gekühlt. Ein Nachteil besteht darin, dass der konstruktive Aufwand für die inneren und äußeren Abdecksegmente sehr hoch ist und einen erhöhten Fertigungsaufwand erforderlich macht.

In der Druckschrift EP 0 959 230 B1 ist eine Gasturbine dargestellt, bei der Innenringsegmente stromab eines Hochdruck-Leitschaufelkranzes mittels Prallkühlung, Konvektionskühlung und Filmkühlung gekühlt werden. Auch hier ist die Geometrie der Anordnung kompliziert und erfordert einen hohen Bauaufwand.

Die Druckschrift US 5,470,198 betrifft eine Gasturbine mit einer Dichtungsanordnung zwischen Ausgangsdüsen einer Brennkammer und einem ersten Leitschaufelkranz, die Kühlluftströme nutzt. Die Dichtungsanordnung ist speziell auf diesen Einsatzbereich abgestimmt.

Die Druckschrift US 2005/0238 477 A1 offenbart eine Vorrichtung zur Verteilung von Kühlluft zum Zwecke der Beeinflussung der Temperaturen in Innenringsegmenten einer Gasturbine mit den Merkmalen des Oberbegriffs des Anspruchs 1.

Der Erfindung liegt daher die Aufgabe zu Grunde eine Vorrichtung bereit zu stellen, die eine Temperaturverteilung in Innenringsegmenten einer Gasturbine verbessert, dabei aber einfach aufgebaut ist, mit wenig Aufwand gefertigt werden kann und mit einem geringen Gewicht auskommt.

Diese Aufgabe wird erfindungsgemäß mit einer Vorrichtung zum Beeinflussen der Temperaturen in Innenringsegmenten einer Gasturbine nach Anspruch 1 gelöst. Weiterhin wird die Aufgabe mit einem Verfahren zum Beeinflussen der Temperaturen in Innenringsegmenten einer Gasturbine nach Anspruch 9 gelöst. Vorteilhafte Ausgestaltungen der Erfindung sind in den Unteransprüchen enthalten.

Erfindungsgemäß besteht die Lösung der Aufgabe in einer Vorrichtung zum Beeinflussen der Temperaturen in Innenringsegmenten einer Gasturbine, wobei die Vorrichtung in Umfangsrichtung der Gasturbine mindestens eine Außenmantelanordnung mit einer Vielzahl von Außenringsegmenten und mindestens eine Innenmantelanordnung mit einer Vielzahl von Innenringsegmenten umfasst, wobei die Vielzahl von Innenringsegmenten größer ist als oder gleich ist wie die Vielzahl von Außenringsegmenten und zwischen jeweils zwei benachbarten Außenringsegmenten ein Außenringsegmentspalt und zwischen jeweils zwei benachbarten Innenringsegmenten ein Innenringsegmentspalt vorhanden sind. In radialer Richtung der Gasturbine liegt jedem Innenringsegmentspalt ein Außenringsegmentspalt oder zumindest ein radialer Kühlluftkanal in einem Außenringsegment gegenüber.

Der Vorteil der erfindungsgemäßen Lösung liegt darin, dass an jeder Umfangsposition, in der Heißgas durch einen Innenringsegmentspalt in den Bereich zwischen der Außenmantelanordnung und der Innenmantelanordnung eindringen kann, auch ein Außenringsegmentspalt oder zumindest ein Kühlluftkanal radial gegenüberliegend vorhanden ist, so dass es zu einer unmittelbaren Durchmischung des Heißgases und der Kühlluft kommt und sich in Umfangsrichtung keine nennenswerten Temperaturgradienten innerhalb Innenmantelanordnung bzw. der Außenmantelanordnung kommt. Hierdurch werden thermische Spannungen im Material minimiert und es ist möglich die Innenmantelanordnung und Außenmantelanordnung relativ dünn und damit leicht auszulegen, ohne Gefahr zu laufen, dass es zu einem strukturellen Versagen dieser Mantelanordnungen auf Grund von thermischen Spannungen kommt. Im Gegensatz hierzu kommt es bei den aus dem Stand der Technik bekannten Vorrichtungen, bei denen ein Innenringsegmentspalt nicht immer einem Außenringsegmentspalt oder einem Külluftkanal und umgekehrt radial gegenüberliegt, zu solchen thermischen Spannungen in Umfangsrichtung der Innenmantelanordnung und/oder Außenmantelanordnung.

Vorzugsweise ist jedem Innenringsegmentspalt ein erstes Umlenkelement, jedem Außenringsegmentspalt ein zweites Umlenkelement und jedem Kühlluftkanal ein Leitelement zum Umlenken von Teilströmen in dieselbe Umfangsrichtung zugeordnet. Dies hat den Vorteil, dass die ersten Umlenkelemente einen Teil eines Heißgases und die zweiten Umlenkelemente und die Leitelemente Kühlluft beim Einströmen in einen Mischungsraum, der sich zwischen den Außenringsegmenten und den Innenraumsegmenten befindet, in die gleiche Richtung umlenken, so dass sich die Kühlluft und der Teil des Heißgases gut vermischen können.

Die Kühlluft und der Teil des Heißgases strömen in den Mischungsraum ein, wobei sich während des Mischungsvorgangs eine Mischungstemperatur einstellt, die sowohl auf die Außenringsegmente als auch auf die Innenringsegmente übertragen wird. Es findet eine Vergleichmäßigung der Temperaturen in den Außenringsegmenten und in den Innenringsegmenten statt. Dadurch wird vermieden, dass sich speziell bei den Innenringsegmenten jeweils ein Mittenbereich bildet, der kühler ist als an den Mittenbereich angrenzende Randbereiche. Thermische Gradienten, die auf diese Weise in den Innenringsegmenten entstehen, werden also verringert. Derartige thermische Gradienten könnten sonst zu Rissen in den Innenringsegmenten und sogar zu einem Versagen bzw. Bruch von Innenringsegmenten führen.

Gemäß einer vorteilhaften Weiterbildung der Erfindung überragen die ersten Umlenkelemente, die zweiten Umlenkelemente und die Leitelemente den jeweils zugehörigen Innenringsegmentspalt bzw. Außenringsegmentspalt bzw. Kühlluftkanal in Umfangsrichtung der Gasturbine. Dadurch werden ein direktes Zusammenprallen des Teils des Heißgases mit der Kühlluft innerhalb des Mischungsraums und folglich auch Abbrems- und Strömungsverluste verringert.

Zusätzlich können die ersten Umlenkelemente, die zweiten Umlenkelemente und die Leitelemente durchgehende Bleche sein, die frei von Materialunterbrechungen sind, und somit Prallbleche bilden. Die Umlenkelemente sind also aus Vollmaterial hergestellt, so dass die Kühlluft und der Teil des Heißgases ohne zusätzliche Leckageverluste in den Mischungsraum einströmen.

Die ersten Umlenkelemente können in Umfangsrichtung der Gasturbine auf den gleichen Positionen wie die zweiten Umlenkelemente bzw. Leitelemente enden oder diese überragen. Wenn die ersten Umlenkelemente, die zweiten Umlenkelemente und die Leitelemente auf den gleichen Positionen enden, strömen die Kühlluft und der Teil des Heißgases gleichzeitig zusammen, wodurch eine besonders gute Durchmischung erzielt wird. Wenn die ersten Umlenkelemente die zweiten Umlenkelemente bzw. Leitelemente überragen, strömt die Kühlluft über die Enden der zweiten Umlenkelemente und der Leitelemente an und kühlt diese thermisch hochbelasteten Stellen.

In einer weiteren Ausgestaltung der Erfindung beträgt das Verhältnis der Anzahl von Innenringsegmenten zur Anzahl von Außenringsegmenten 2:1. Dadurch liegen den Innenringsegmentspalten abwechselnd ein Außenringsegmentspalt und ein Kühlluftkanal gegenüber. Somit wird pro Außenringsegment nur ein Kühlluftkanal bzw. nur eine Reihe von Kühlluftkanälen benötigt. Es ist daher lediglich ein geringer Fertigungsaufwand erforderlich.

Weiterhin betrifft die Erfindung eine stationäre Gasturbine mit der Vorrichtung.

Alternativ betrifft die Erfindung ein Flugzeugtriebwerk mit der Vorrichtung.

Weiterhin besteht die Lösung der Aufgabe in einem Verfahren zum Beeinflussen der Temperaturen in Innenringsegmenten einer Gasturbine mittels der Vorrichtung, wobei mindestens zwei erste Teilströme des Heißgases und mindestens zwei zweite Teilströme der Kühlluft in den Mischungsraum einströmen, innerhalb des Mischungsraums eine thermische Durchmischung der ersten Teilströme des Heißgases und der zweiten Teilströme der Kühlluft stattfindet und dabei ein Mischungsstrom entsteht , wobei die ersten Teilströme des Heißgases und die zweiten Teilströme der Kühlluft in der gleichen Umfangsrichtung der Gasturbine in den Mischungsraum einströmen.

Es ist vorteilhaft, die Kühlluft und den Teil des Heißgases beim Einströmen in den Mischungsraum in Teilströme aufzuteilen, denn eine Mischung einzelner Teilströme ist thermisch effizienter als das Mischen eines ungeteilten Stroms von Kühlluft mit einem nicht weiter zerlegten Teil des Heißgases. Bei einer gleichgerichteten Strömung der ersten Teilströme des Heißgases und der zweiten Teilströme der Kühlluft ist eine besonders effiziente und verlustarme Durchmischung möglich. Während der Durchmischung der ersten Teilströme des Heißgases und der zweiten Teilströme der Kühlluft werden Temperaturen in den Innenringsegmenten vergleichmäßigt. Durch die Vergleichmäßigung der Temperaturen in den Innenringsegmenten wird eine Entstehung von Rissen in den Innenringsegmenten und damit ein mögliches Versagen von Innenringsegmenten vermieden. Die ersten Teilströme des Heißgases werden also gezielt für einen Temperaturausgleich genutzt. Derartige Teilströme des Heißgases wären bei herkömmlichen Anordnungen lediglich als Leckage angesehen worden.

In einer zweckmäßigen Ausgestaltung der Erfindung strömen die zweiten Teilströme der Kühlluft in Umfangsrichtung der Gasturbine vor den ersten Teilströmen des Heißgases oder auf gleicher Position wie die ersten Teilströme des Heißgases in den Mischungsraum ein. Wenn die zweiten Teilströme der Kühlluft vor den ersten Teilströmen der Kühlluft in den Mischungsraum einströmen, werden die Enden der ersten Umlenkelemente gekühlt, wodurch thermische Spitzenbelastungen in den ersten Umlenkelementen vermieden werden. Wenn die zweiten Teilströme der Kühlluft auf gleicher Position wie die ersten Teilströme der Kühlluft in den Mischungsraum einströmen, findet eine gleichmäßige Durchmischung statt, die in Bezug auf den Temperaturübergang auf die Innenringsegmente günstig ist.

Gemäß einer weiteren Ausgestaltung der Erfindung durchströmt der Mischungsstrom den Mischungsraum in Umfangsrichtung der Gasturbine. Eine Durchströmung in Umfangsrichtung hat den Vorteil, dass die ersten Teilströme des Heißgases und die zweiten Teilströme des Heißgases an den Innenringsegmenten entlangströmen, wobei eine Temperatur eines Mischungsstromes aus den ersten Teilströmen des Heißgases und den zweiten Teilströmen der Kühlluft konvektiv auf die Innenringsegmente übertragen wird und die thermischen Gradienten innerhalb der Innenringsegmente minimiert werden.

In einer zweckmäßigen Weiterbildung der Erfindung tritt der Mischungsstrom durch Spalte in axial stromabwärts liegenden Aufnahmen der Innenringsegmente aus. Auf diese Weise kann der Mischungsstrom aus den ersten Teilströmen des Heißgases und den zweiten Teilströmen der Kühlluft einfach aus dem Mischungsraum herausgeführt werden.

Im Folgenden wird ein Ausführungsbeispiel der Erfindung anhand einer einzigen Figur näher erläutert. Es zeigt:

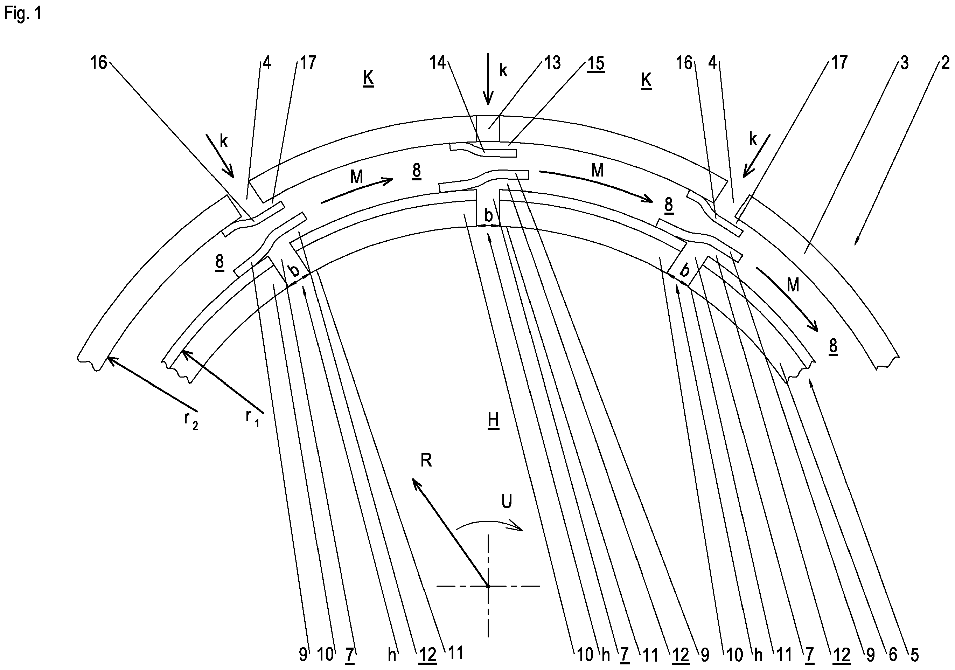

- Fig. 1: eine schematische Schnittansicht einer erfindungsgemäßen Vorrichtung.

Fig. 1 zeigt eine schematische Schnittansicht einer Vorrichtung 1 mit einer Außenmantelanordnung 2 und einer Innenmantelanordnung 5 einer ansonsten nicht weiter dargestellten thermischen Strömungsmaschine, die gemäß dem Ausführungsbeispiel im Folgenden als Gasturbine beschrieben ist. Je eine Außenmantelanordnung 2 und eine zugehörige Innenmantelanordnung 5 sind zwischen zwei benachbarten Leitschaufelkränzen angeordnet. Die Außenmantelvorrichtung 2 umfasst mindestens zwei Außenringsegmente 3. In der Fig. 1 sind ein Außenringsegment 3 ausführlich dargestellt und zwei weitere Außenringsegmente 3 angedeutet. Die Innenmantelanordnung 5 umfasst mehrere Innenringsegmente 6, von denen in der Fig. 1 vier Innenringsegmente 6 dargestellt sind. Die Anzahl der Innenringsegmente 6 ist größer als die Anzahl der Außenringsegmente 3. In der Figur beträgt das Verhältnis der Anzahl von Innenringsegmenten 6 zur Anzahl von Außenringsegmenten 3 zwei zu eins.

Die Innenringsegmente 6 sind in Umfangsrichtung U der Gasturbine gekrümmt und bilden einen in Fig. 1 nicht vollständig dargestellten ringförmigen Innenmantel. Zwischen jeweils zwei benachbarten Innenringsegmenten 6 befindet sich ein Innenringsegmentspalt 7. Die Breite b der Innenringsegmentspalte 7 wird möglichst klein gewählt, damit nur ein minimaler Teil des Heißgases H aus einem nicht dargestellten Turbinenraum der Gasturbine abgezweigt wird.

An den Innenringsegmentspalten 7 befinden sich erste Umlenkelemente 9 (engl.: ship laps), die von außen jeweils an einem Innenringsegment 6 befestigt sind. Die ersten Umlenkelemente 9 können als Bleche ausgeführt sein und ragen in Umfangsrichtung U der Gasturbine jeweils über einen Innenringsegmentspalt hinaus. Jedes erste Umlenkelement 9 erstreckt sich in einer axialen Richtung der Gasturbine, d.h. senkrecht zur Bildebene der Fig. 1, über die gesamte Länge eines zugehörigen Innenringsegmentspalts 7. Zwischen je einem Innenringsegmentspalt 7 und einem ersten Umlenkelement wird ein erster Strömungsraum 12 gebildet.

Die Außenringsegmente 3 sind in Umfangsrichtung U der Gasturbine gekrümmt und bilden einen in Fig. 1 nicht vollständig dargestellten ringförmigen Außenmantel. Zwischen jeweils zwei benachbarten Außenringsegmenten 3 befindet sich ein Außenringsegmentspalt 4. Jeder Außenringsegmentenspalt 4 kann gleich, kleiner oder größer als die Innenringsegmentenspalte 3 sein. In jedem Außenringsegment 3 ist in radialer Richtung R der Gasturbine ein Kühlluftkanal 13 angebracht. Es können jedoch auch mehrere Kühlluftkanäle 13 vorhanden sein, die in der axialen Richtung der Gasturbine eine Reihe bilden. Die Anzahl und Größe der Kühlluftkanäle 13 wird möglichst klein gewählt, damit nur ein minimaler Anteil an Luft aus einem nicht dargestellten Verdichter der Gasturbine abgezweigt wird. Bevorzugterweise sind die Kühlluftkanäle 13 schmaler als die Außenringsegmentenspalte 4 und die Innenringsegmentenspalte 7.

An dem Kühlluftkanal 13 bzw. den Kühlluftkanälen 13 befinden sich Leitelemente 14 (engl.: pseudo ship laps), die von innen an den Außenringsegmenten 3 befestigt sind. Die Leitelemente 14 können als Bleche ausgeführt sein und ragen in Umfangsrichtung U der Gasturbine jeweils über einen Kühlluftkanal 13 hinaus. Zwischen je einem Kühlluftkanal 13 und einem Leitelement 14 wird so ein zweiter Strömungsraum 15 gebildet.

An den Außenringsegmentspalten 4 befinden sich zweite Umlenkelemente 16 (engl.: ship laps), die von innen an einem Außenringsegment 3 befestigt sind. Die zweiten Umlenkelemente 16 können als Bleche ausgeführt sein und ragen in Umfangsrichtung U der Gasturbine jeweils über einen Außenringsegmentspalt 4 hinaus. Jedes zweite Umlenkelement 16 erstreckt sich in einer axialen Richtung der Gasturbine, d.h. senkrecht zur Bildebene der Fig. 1, über die gesamte Länge eines zugehörigen Außenringsegmentspalts 4. Zwischen je einem Außenringsegmentspalt 4 und einem zweiten Umlenkelement 16 wird ein dritter Strömungsraum 17 gebildet.

Die Außenringsegmente 3 sind in radialer Richtung R der Gasturbine von den Innenringsegmenten 6 beabstandet. Der äußere Radius r₁ der Innenringsegmente 6 ist dabei kleiner als der innere Radius r₂ der Außenringsegmente 3. Zwischen den Außenringsegmenten 3 und den Innenringsegmenten 6 ist also ein ringförmiger Zwischenraum vorhanden, der in Fig. 1 als Mischungsraum 8 bezeichnet wird.

Im Betrieb bildet das Heißgas aus dem Turbinenraum der Gasturbine eine Vielzahl von ersten Teilströmen h. Es strömt jeweils ein erster Teilstrom h des Heißgases H durch einen Innenringsegmentspalt 7. Die Teilströme h des Heißgases H strömen in radialer Richtung R der Gasturbine von innen nach außen und können daher auch als innere Teilströme bezeichnet werden. Jeder erste Teilstrom h wird durch ein zugehöriges erstes Umlenkelement 9 in den Mischungsraum 8 umgelenkt. Gleichzeitig bildet Kühlluft K, die von dem Verdichter der Gasturbine abgezweigt wird, eine Vielzahl von zweiten Teilströmen k. Die Teilströme k der Kühlluft K strömen in radialer Richtung R der Gasturbine von außen nach innen und können daher auch als äußere Teilströme bezeichnet werden. Die zweiten Teilströme k strömen in Umfangsrichtung U abwechselnd durch einen Außenringsegmentspalt 4 und einen Kühlluftkanal 13. Jeder zweite Teilstrom k, der durch einen Außenringsegmentspalt 4 strömt, wird durch ein zugehöriges zweites Umlenkelement 16 in den Mischungsraum 8 umgelenkt. Jeder zweite Teilstrom k, der durch einen Kühlluftkanal 13 strömt, wird von einem zugehörigen Leitelement 14 in den Mischungsraum 8 umgelenkt.

Die ersten Teilströme h und die zweiten Teilströme k strömen dann in derselben Umfangsrichtung U der Gasturbine in den Mischungsraum 8 ein und bilden einen gemeinsamen Mischungsstrom M. Innerhalb des Mischungsstroms M findet ein Temperaturausgleich zwischen den ursprünglichen ersten Teilströmen h und den zweiten Teilströmen k statt. Die Mischungstemperatur wird auf die Außenringsegmente 3 und die Innenringsegmente 6 übertragen. Diese Temperaturübertragung ist für die Innenringsegmente 6 noch wichtiger als für die Außenringsegmente 3, denn die Innenringsegmente 6 sind aufgrund des angrenzenden Heißgases H höheren thermischen Belastungen ausgesetzt. Für den Temperaturausgleich werden also die ersten Teilströme h des Heißgases gezielt genutzt. Der Mischungsstrom M kann den Mischungsraum 8 durch in Fig. 1 nicht dargestellte Spalte in axial stromabwärts liegenden Aufnahmen der Innenringsegmente 6.

Die Durchmischung der ersten Teilströme h und der zweiten Teilströme k bewirkt eine Abkühlung der Innenringsegmente 6 und eine Erwärmung der Außenringsegmente 3. Die Temperaturen der Innenringsegmente 6 und die Temperaturen der Außenringsegmente 3 werden also an einander angenähert. Thermische Gradienten und daraus folgende Thermospannungen werden bei diesem Vorgang verringert oder sogar vermieden, besonders in den Innenringsegmenten 6. Ein Rissbildungsrisiko wird gesenkt. Dies erhöht die Sicherheit der Gasturbine im Betrieb.

Die Erfindung bezieht sich auf eine Vorrichtung 1 zum Beeinflussen der Temperaturen in Innenringsegmenten 6 einer Gasturbine, wobei die Vorrichtung in Umfangsrichtung U der Gasturbine mindestens eine Außenmantelanordnung 2 mit einer Vielzahl von Außenringsegmenten 3 und mindestens eine Innenmantelanordnung 5 mit einer Vielzahl von Innenringsegmenten 6 umfasst, wobei die Vielzahl von Innenringsegmenten 6 größer ist als oder gleich ist wie die Vielzahl von Außenringsegmenten 3 und zwischen jeweils zwei benachbarten Außenringsegmenten 3 ein Außenringsegmentspalt 4 und zwischen jeweils zwei benachbarten Innenringsegmenten 6 ein Innenringsegmentspalt 7 vorhanden sind.

Um eine Vorrichtung bereit zu stellen, die eine Temperaturverteilung in Innenringsegmenten einer Gasturbine verbessert, dabei aber einfach aufgebaut ist, mit wenig Aufwand gefertigt werden kann und wenig wiegt, liegt in radialer Richtung R der Gasturbine jedem Innenringsegmentspalt 7 ein Außenringsegmentspalt 4 oder zumindest ein radialer Kühlluftkanal 13 in einem Außenringsegment 3 gegenüber, wobei jedem Innenringsegmentspalt 7 ein erstes Umlenkelement 9, jedem Außenringsegmentspalt 4 ein zweites Umlenkelement 16 und jedem Kühlluftkanal 13 ein Leitelement 14 zum Umlenken von Teilströmen k, h in dieselbe Umfangsrichtung U zugeordnet ist.

### Bezugszeichenliste

- 1: Vorrichtung
- 2: Außenmantelanordnung
- 3: Außenringsegment
- 4: Außenringsegmentspalt
- 5: Innenmantelanordnung
- 6: Innenringsegment
- 7: Innenringsegmentspalt
- 8: Mischungsraum
- 9: Erstes Umlenkelement
- 12: Erster Strömungsraum
- 13: Kühlluftkanal
- 14: Leitelement
- 15: Zweiter Strömungsraum
- 16: Zweites Umlenkelement
- 17: Dritter Strömungsraum

- H: Heißgas
- h: Erster Teilstrom
- K: Kühlluft
- k: Zweiter Teilstrom
- M: Mischungsstrom
- U: Umfangsrichtung
- R: Radiale Richtung
- r₁: Äußerer Radius
- r₂: Innerer Radius
- b: Breite

## Patentansprüche

1. Vorrichtung (1) zum Beeinflussen der Temperaturen in Innenringsegmenten (6) einer Gasturbine, wobei die Vorrichtung in Umfangsrichtung (U) der Gasturbine mindestens eine Außenmantelanordnung (2) mit einer Vielzahl von Außenringsegmenten (3) und mindestens eine Innenmantelanordnung (5) mit einer Vielzahl von Innenringsegmenten (6) umfasst, wobei zwischen der Außenmantelanordnung (2) und der Innenmantelanordnung (5) ein Mischungsraum (8) zur thermischen Durchmischung von mindestens zwei ersten Teilströmen (h) von Heißgas (H) und mindestens zwei zweiten Teilströmen (k) von Kühlluft (K) gebildet ist, wobei die Vielzahl von Innenringsegmenten (6) größer ist als oder gleich ist wie die Vielzahl von Außenringsegmenten (3) und zwischen jeweils zwei benachbarten Außenringsegmenten (3) ein Außenringsegmentspalt (4) vorhanden ist, durch jeden davon jeweils ein zweiter Teilstrom (k) der Kühlluft (K) in radialer Richtung (R) der Gasturbine von außen nach innen strömen kann, und zwischen jeweils zwei benachbarten Innenringsegmenten (6) ein Innenringsegmentspalt (7) vorhanden ist, durch jeden davon jeweils ein erster Teilstrom (h) des Heißgases (H) radial von innen nach außen strömen kann, **dadurch gekennzeichnet, dass** in radialer Richtung (R) jedem Innenringsegmentspalt (7) ein Außenringsegmentspalt (4) oder zumindest ein radialer Kühlluftkanal (13) in einem Außenringsegment (3) gegenüberliegt, so dass an jeder Umfangsposition, in der Heißgas (H) durch einen Innenringsegmentspalt (7) in den Mischungsraum (8) eindringen kann, auch Kühlluft (K) in den Mischungsraum (8) einströmen kann, wobei die eindringenden ersten Teilströme (h) des Heißgases (H) und die eindringenden zweiten Teilströme (k) der Kühlluft (K) derart ausgerichtet sind, dass sie in der gleichen Umfangsrichtung (U) in den Mischungsraum (8) einströmen.

2. Vorrichtung (1) nach Anspruch 1, **dadurch gekennzeichnet, dass** jedem Innenringsegmentspalt (7) ein erstes Umlenkelement (9), jedem Außenringsegmentspalt (4) ein zweites Umlenkelement (16) und jedem Kühlluftkanal (13) ein Leitelement (14) zum Umlenken von Teilströmen (k, h) in dieselbe Umfangsrichtung (U) zugeordnet ist.

3. Vorrichtung (1) nach Anspruch 2, **dadurch gekennzeichnet, dass** die ersten Umlenkelemente (9), die zweiten Umlenkelemente (16) und die Leitelemente (14) den jeweils zugehörigen Innenringsegmentspalt (7) bzw. Außenringsegmentspalt (4) bzw. Kühlluftkanal in Umfangsrichtung (U) der Gasturbine überragen.

4. Vorrichtung (1) nach Anspruch 2 oder 3, **dadurch gekennzeichnet, dass** die ersten Umlenkelemente (9), die zweiten Umlenkelemente (16) und die Leitelemente (14) durchgehende Bleche sind, die frei von Materialunterbrechungen sind.

5. Vorrichtung nach einem der Ansprüche 2 bis 4, **dadurch gekennzeichnet, dass** die ersten Umlenkelemente (9) in Umfangsrichtung (U) der Gasturbine auf den gleichen Positionen wie die zweiten Umlenkelemente (16) bzw. Leitelemente (14) enden oder diese überragen.

6. Vorrichtung nach einem der vorhergehenden Ansprüche, **dadurch gekennzeichnet, dass** das Verhältnis der Anzahl von Innenringsegmenten (6) zur Anzahl von Außenringsegmenten (3) 2:1 beträgt.

7. Stationäre Gasturbine mit einer Vorrichtung (1) nach einem der vorhergehenden Ansprüche.

8. Flugzeugtriebwerk mit einer Vorrichtung (1) nach einem der Ansprüche 1 bis 6.

9. Verfahren zum Beeinflussen der Temperaturen in Innenringsegmenten (6) einer Gasturbine, welches die folgenden Schritte umfasst:
- Bereitstellen einer Vorrichtung (1) nach einem der Ansprüche 1 bis 6 und
- Betreiben der Vorrichtung, so dass mindestens zwei erste Teilströme (h) des Heißgases (H) und mindestens zwei zweite Teilströme (k) der Kühlluft (K) in den Mischungsraum (8) einströmen, innerhalb des Mischungsraums (8) eine thermische Durchmischung der ersten Teilströme (h) des Heißgases (H) und der zweiten Teilströme (k) der Kühlluft (K) stattfindet und dabei ein Mischungsstrom (M) entsteht, wobei die ersten Teilströme (h) des Heißgases (H) und die zweiten Teilströme (k) der Kühlluft (K) in der gleichen Umfangsrichtung (U) der Gasturbine in den Mischungsraum (8) einströmen.

10. Verfahren nach Anspruch 9, **dadurch gekennzeichnet, dass** die zweiten Teilströme (k) der Kühlluft (K) in Umfangsrichtung (U) der Gasturbine vor den ersten Teilströmen (h) des Heißgases (H) oder auf gleicher Position wie die ersten Teilströme (h) des Heißgases (H) in den Mischungsraum einströmen.

11. Verfahren nach einem der Ansprüche 9 oder 10, **dadurch gekennzeichnet, dass** der Mischungsstrom (M) den Mischungsraum (8) in Umfangsrichtung (U) der Gasturbine durchströmt.

12. Verfahren nach einem der Ansprüche 9 bis 11, **dadurch gekennzeichnet, dass** der Mischungsstrom M durch Spalte in axial stromabwärts liegenden Aufnahmen der Innenringsegmente (6) austritt.

## Claims

1. Device (1) for influencing the temperatures in inner ring segments (6) of a gas turbine, the device comprising, in the circumferential direction (U) of the gas turbine, at least one outer shell assembly (2) having a plurality of outer ring segments (3) and at least one inner shell assembly (5) having a plurality of inner ring segments (6), a mixing space (8) for thermally mixing at least two first partial flows (h) of hot gas (H) and at least two second partial flows (k) of cooling air (K) being formed between the outer shell assembly (2) and the inner shell assembly (5), the number of inner ring segments (6) being greater than or equal to the number of outer ring segments (3) and an outer ring segment gap (4) being present between every two adjacent outer ring segments (3), through which gap a second partial flow (k) of the cooling air (K) can flow in each case from the outside inwards in the radial direction (R) of the gas turbine, and an inner ring segment gap (7) being present between every two adjacent inner ring segments (6), through which gap a first partial flow (h) of the hot gas (H) can flow in each case radially from the inside outwards, **characterized in that** an outer ring segment gap (4) or at least one radial cooling air channel (13) in an outer ring segment (3) is opposite each inner ring segment gap (7) in the radial direction (R), such that at each circumferential position in which the hot gas (H) can penetrate the mixing space (8) through an inner ring segment gap (7), cooling air (K) can also flow into the mixing space (8), the penetrating first partial flows (h) of the hot gas (H) and the penetrating second partial flows (k) of the cooling air (K) being aligned such that they flow into the mixing space (8) in the same circumferential direction (U).

2. Device (1) according to claim 1, **characterized in that** a first deflecting element (9) is associated with each inner ring segment gap (7), a second deflecting element (16) is associated with each outer ring segment gap (4), and a pseudo ship lap (14) for deflecting partial flows (k, h) in the same circumferential direction (U) is associated with each cooling air channel (13).

3. Device (1) according to claim 2, **characterized in that** the first deflecting elements (9), the second deflecting elements (16) and the pseudo ship laps (14) protrude over the associated inner ring segment gap (7), outer ring segment gap (4) and cooling air channel, respectively, in the circumferential direction (U) of the gas turbine.

4. Device (1) according to either claim 2 or claim 3, **characterized in that** the first deflecting elements (9), the second deflecting elements (16) and the pseudo ship laps (14) are continuous metal sheets without any disruptions in the material.

5. Device according to any of claims 2 to 4, **characterized in that** the first deflecting elements (9) end at the same position as the second deflecting elements (16) or pseudo ship laps (14) or protrude thereover in the circumferential direction (U) of the gas turbine.

6. Device according to any of the preceding claims, **characterized in that** the ratio of the number of inner ring segments (6) to the number of outer ring segments (3) is 2:1.

7. Stationary gas turbine comprising a device (1) according to any of the preceding claims.

8. Aircraft engine comprising a device (1) according to any of claims 1 to 6.

9. Method for influencing the temperatures in inner ring segments (6) of a gas turbine, comprising the following steps:
- providing a device (1) according to any of claims 1 to 6, and
- operating the device such that at least two first partial flows (h) of the hot gas (H) and at least two second partial flows (k) of the cooling air (K) flow into the mixing space (8), the first partial flows (h) of the hot gas (H) and the second partial flows (k) of the cooling air (K) are thermally mixed in the mixing space (8), and a mixed flow (M) is thus produced, wherein the first partial flows (h) of the hot gas (H) and the second partial flows (k) of the cooling air (K) flow into the mixing space (8) in the same circumferential direction (U) of the gas turbine.

10. Method according to claim 9, **characterized in that** the second partial flows (k) of the cooling air (K) flow into the mixing space, in the circumferential direction (U) of the gas turbine, upstream of the first partial flows (h) of the hot gas (H) or at the same position as the first partial flows (h) of the hot gas (H).

11. Method according to either claim 9 or claim 10, **characterized in that** the mixed flow (M) flows through the mixing space (8) in the circumferential direction (U) of the gas turbine.

12. Method according to any of claims 9 to 11, **characterized in that** the mixed flow M escapes through gaps in axially downstream holding means of the inner ring segments (6).

## Revendications

1. Dispositif (1) destiné à influer sur la température dans des segments annulaires internes (6) d'une turbine à gaz, le dispositif comprenant dans la direction circonférentielle (U) de la turbine à gaz au moins un ensemble formant enveloppe externe (2) comportant une pluralité de segments annulaires externes (3) et au moins un ensemble formant enveloppe interne (5) comportant une pluralité de segments annulaires internes (6), un espace de mélange (8) étant formé entre l'ensemble formant enveloppe externe (2) et l'ensemble formant enveloppe interne (5) pour le mélange thermique d'au moins deux premiers flux partiels (h) de gaz chaud (H) et d'au moins deux seconds flux partiels (k) d'air de refroidissement (K), la pluralité de segments annulaires internes (6) étant supérieure ou égale à la pluralité de segments annulaires externes (3) et un intervalle de segments annulaires externes (4) étant présent à chaque fois entre deux segments annulaires externes (3) adjacents, un second flux partiel (k) d'air de refroidissement (K) pouvant s'écouler de l'extérieur vers l'intérieur par chacun desdits intervalles de segments annulaires externes dans la direction radiale (R) de la turbine à gaz, et un intervalle de segments annulaires internes (7) étant présent à chaque fois entre deux segments annulaires internes (6) adjacents, un premier flux partiel (h) de gaz chaud (H) pouvant s'écouler de l'intérieur vers l'extérieur par chacun desdits intervalles de segments annulaires internes dans la direction radiale, **caractérisé en ce que** dans la direction radiale (R), un intervalle de segments annulaires externes (4) ou au moins un canal d'air de refroidissement (13) radial dans un segment annulaire externe (3) est opposé à chaque intervalle de segments annulaires internes (7), de sorte que, à chaque position circonférentielle, dans laquelle le gaz chaud (H) peut pénétrer dans l'espace de mélange (8) par un intervalle de segments annulaires internes (7), l'air de refroidissement (K) puisse également s'écouler jusque dans l'espace de mélange (8), les premiers flux partiels (h) de gaz chaud (H) entrants et les seconds flux partiels (k) entrants d'air de refroidissement (K) étant orientés de telle sorte qu'ils s'écoulent jusque dans l'espace de mélange (8) dans la même direction circonférentielle (U).

2. Dispositif (1) selon la revendication 1, **caractérisé en ce qu'**un premier élément déflecteur (9) est associé à chaque intervalle de segments annulaires internes (7), un second élément déflecteur (16) est associé à chaque intervalle de segments annulaires internes (4), et un élément de guidage (14) est associé à chaque canal d'air de refroidissement (13) pour dévier les flux partiels (k, h) dans la même direction circonférentielle (U).

3. Dispositif (1) selon la revendication 2, **caractérisé en ce que** les premiers éléments déflecteurs (9), les seconds éléments déflecteurs (16) et les éléments de guidage (14) font saillie de l'intervalle de segments annulaires internes (7), de l'intervalle de segments annulaires externes (4) et du canal d'air de refroidissement, qui leurs sont respectivement associés, dans la direction circonférentielle (U) de la turbine à gaz.

4. Dispositif (1) selon la revendication 2 ou 3, **caractérisé en ce que** les premiers éléments déflecteurs (9), les seconds éléments déflecteurs (16) et les éléments de guidage (14) sont des tôles continues exemptes de discontinuités de matière.

5. Dispositif selon l'une des revendications 2 à 4, **caractérisé en ce que,** dans la direction circonférentielle (U) de la turbine à gaz, les premiers éléments déflecteurs (9) se terminent aux mêmes positions que les seconds éléments déflecteurs (16) ou que les éléments de guidage (14), ou font saillie de ceux-ci.

6. Dispositif selon l'une des revendications précédentes, **caractérisé en ce que** le rapport entre le nombre de segments annulaires internes (6) et le nombre de segments annulaires externes (3) est de 2:1.

7. Turbine à gaz stationnaire comportant un dispositif (1) selon l'une des revendications précédentes.

8. Moteur d'aéronef comportant un dispositif (1) selon l'une des revendications 1 à 6.

9. Procédé destiné à influer sur les températures dans les segments annulaires internes (6) d'une turbine à gaz, le procédé comprenant les étapes suivantes :
- fournir un dispositif (1) selon l'une des revendications 1 à 6, et
- utiliser le dispositif de telle sorte qu'au moins deux premiers flux partiels (h) de gaz chaud (H) et au moins deux seconds flux partiels (k) d'air de refroidissement (K) s'écoulant jusque dans l'espace de mélange (8), qu'un mélange thermique des premiers flux partiels (h) de gaz chaud (H) et des seconds flux partiels (k) d'air de refroidissement (K) est effectué à l'intérieur de l'espace de mélange (8) et qu'un flux de mélange (M) est ainsi généré, les premiers flux partiels (h) de gaz chaud (H) et les seconds flux partiels (k) d'air de refroidissement (K) s'écoulant jusque dans l'espace de mélange (8) dans la même direction circonférentielle (U) de la turbine à gaz.

10. Procédé selon la revendication 9, **caractérisé en ce que,** dans la direction circonférentielle (U) de la turbine à gaz, les seconds flux partiels (k) d'air de refroidissement (K) s'écoulent jusque dans l'espace de mélange avant les premiers flux partiels (h) de gaz chaud (H), ou à la même position que les premier flux partiels (h) de gaz chaud (H).

11. Procédé selon l'une des revendications 9 ou 10, **caractérisé en ce que** le flux de mélange (M) traverse l'espace de mélange (8) dans la direction circonférentielle (U) de la turbine à gaz.

12. Procédé selon l'une des revendications 9 à 11, **caractérisé en ce que** le flux de mélange (M) sort par des intervalles dans des logements, situés axialement en aval, des segments annulaires internes (6).
